(19) **Europäisches Patentamt / European Patent Office / Office européen des brevets**

(11) **EP 2 401 927 B1**

(12) **EUROPEAN PATENT SPECIFICATION**

(45) Date of publication and mention
of the grant of the patent:
**18.04.2018 Bulletin 2018/16**

(51) Int Cl.:
*A24B 13/00* (2006.01)     *A24B 15/18* (2006.01)
*A24B 15/16* (2006.01)     *A24D 1/18* (2006.01)

(21) Application number: **11182684.8**

(22) Date of filing: **26.04.2007**

(54) **A MOIST SNUFF NON-TOBACCO COMPOSITION AND A METHOD FOR PRODUCTION THEREOF.**

FEUCHTE SCHNUPFZUSAMMENSETZUNG OHNE TABAK UND HERSTELLUNGSVERFAHREN DAFÜR

COMPOSITION HUMIDE A PRISER SANS TABAC ET SON PROCÉDÉ DE PRODUCTION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.04.2006 SE 0600958**

(43) Date of publication of application:
**04.01.2012 Bulletin 2012/01**

(62) Document number(s) of the earlier application(s) in accordance with Art. 76 EPC:
**07748070.5 / 2 012 601**

(73) Proprietor: **Swedish Match North Europe AB**
**118 85 Stockholm (SE)**

(72) Inventors:
• **Essén, Tomas**
**Southhampton, SO16 7QN (GB)**
• **Brännberg, Tobias**
**448 91 Floda (SE)**

(74) Representative: **Valea AB**
**Box 7086**
**103 87 Stockholm (SE)**

(56) References cited:
**WO-A1-2004/056218     WO-A2-2007/035486**
**US-A- 5 417 229     US-A1- 2004 118 422**
**US-A1- 2004 123 873**

EP 2 401 927 B1

**Description**

This invention concerns the technical field of non-tobacco products, in particular a method for the production of a moist snuff non-tobacco composition and a composition obtainable from said method.

**Background**

Tobacco can be used and/or consumed in a variety of products and methods. Most commonly, tobacco is smoked, chewed, or used as snuff.

Smokeless tobacco products are tobacco-based products that are held in the mouth for an extended period of time and either chewed or used as snuff ("dipped"). Chewing tobacco, which is popularly called chew or chaw, is available as coherent plugs. On the other hand, snuff is not chewed. Snuff is available in two forms-dry for sniffing, and moist (or wet), for placing between the lip and gum.

Unfortunately, the nicotine in tobacco is a substance to which people may become addicted. Thus, increasing attention by the medical profession and the public has been directed against chewing tobacco and moist snuff.

In light of the foregoing, there is a need for non-tobacco products intended for personal use as chew or snuff. Such smokeless non-tobacco products may be offered as a healthier alternative to smokeless tobacco products, especially for those who currently use smokeless tobacco products. Smokeless non-tobacco products could be developed without addictive nicotine.

Through US 2004/0123873 there is disclosed a non-tobacco moist snuff composition wherein corn silk is used for producing a non-tobacco moist snuff composition.

US 2004/118422 and WO 2004/056218 disclose a smokeless tobacco composition, in particular a moist snuff composition, comprising a thickening agent.

There are also dry non-tobacco snuff products for oral use currently on the Swedish market, Choice®, XQs™ and RealTaste. However they are not moist and will not resemble the feeling when using moist tobacco snuff products. Accordingly they all lack similarity with moist tobacco snuff products, e.g. snus, and they have not the taste and characteristics similar to moist tobacco snuff products, e.g. snus. Further several of the non-tobacco products are based on herbs. Herbs often have infections of bacteria and mould obtained from the fields.

Thus it is desirable to be able to provide a method for obtaining a moist non-tobacco product which resembles moist snuff, e.g. snus, so that a consumer feels comfortable in his/her mouth when using a moist non-tobacco product in comparison with when using moist snuff, e.g. snus. Accordingly it would be desirable to have a moist non-tobacco product with a moisture level which is relatively high. It is also desirable to provide a moist non-tobacco product with low bacteria content and which is thus safer for the consumer.

**Summary of the invention**

The present invention solves one or more of the above problems by providing according to a first aspect a method for manufacturing a non-tobacco moist snuff composition for oral use, comprising one or more plant fibers, comprising the following steps:

a) providing of one or more plant fibers, selected from the group consisting of maize fibers, oat fibers, tomato fibers, barley fibers, rye fibers, sugar beet fibers, buck wheat fibers, potato fibers, cellulose fibers, apple fibers and cocoa fibers, preferably in flour form, optionally preceded by grinding or cutting and/or sieving of raw material for providing said one or more plant fibers;

b) processing of one or more plant fibers provided in step a), preceded by mixing if more than one type of fiber is used or if fibers with different size distribution are used; wherein step b) comprises the following steps:

i) adding water to give a water content of 30-50% per weight or more, most preferred 35-41 %, one or more humectants, and NaCl to the plant fibers under stirring to form a mixture;
ii) heating and keeping the mixture heated, thus achieving a pasteurisation of the mixture, ,
iii) cooling the moist snuff mixture; and
iv) optionally adding other ingredients such as one or more other salts, humectants, dyes, flavours and flavour additives, such as liquorice and ammonium chloride,

c) and optionally packing, either in pouches, which is preferred, or as is in cans.

**Detailed description of the invention**

It is intended throughout the present description that the expression "plant fibers" embraces any plant fiber that may be useful when manufacturing a moist non-tobacco snuff.

When discussing the expression "water content" throughout the present description it is intended to embrace a water content measured by using Karl Fischer titration which is a known method for the person skilled in the art for measuring water (moisture) content.

When making snus, i.e. a tobacco-containing moist snuff, according to the **Gothia**Tek® standard the main ingredients except for tobacco are normally water, salt (table salt; NaCl) and sodium carbonate. Flavours and humectants may also be used. Salt is added mainly for its effect on taste but it also has a preservative action which contributes to improved shelf life of the products. Sodium carbonate is used to give the products their characteristic flavour profile but also brings the pH value to the slightly alkaline side. Sodium carbonate will convert to baking soda immediately after it is added. Flavours in general are natural or nature identical compounds that comply with food regulations. Flavours are usually dissolved in alcohol when added. Most of the alcohol evaporates during production. Only trace quantities remain. Humectants may also be added to protect the products from drying out. Two types may be used: glycerol and propylene glycol. Both of them also have a preservative effect since they lower the water activity of the product, thus preventing micro organisms from growing.

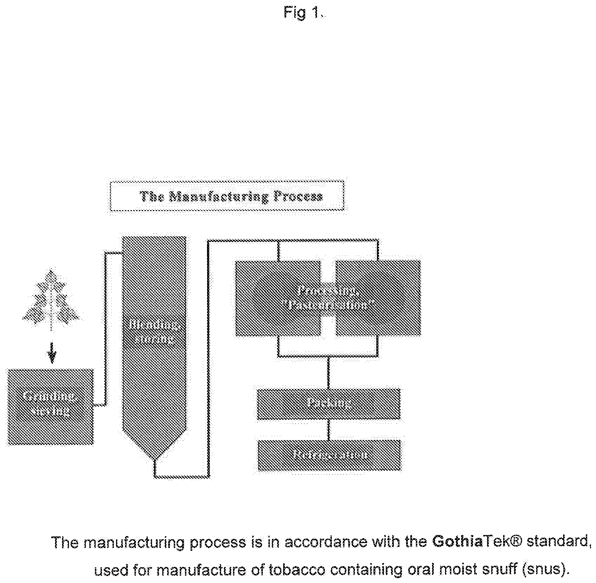

The moist tobacco-containing snuff is then manufactured in two major steps, a) grinding (cutting) and b) processing (see Figure 1).

**a) Grinding, sieving**

The tobacco is broken up, dried and fed into a grinder. The ground tobacco is sieved into three particle size fractions, coarse, medium and fine. Pre-set quantities of the three fractions are fed into a mixer silo where the tobacco flour is mixed. After blending, the tobacco flour is fed into a storage silo, from which flour is automatically taken to the processing operation. Each type of tobacco mixture is kept in a separate silo.

**b) Processing**

Manufacturing of Swedish moist snuff is preferably done in a batch operation. The whole process may be computer controlled and can be run day and night, all week around. To start the process, tobacco flour is automatically weighed and fed into the process blender. Water and salt is added to the batch under stirring. The batch is then heated and kept heated up for a specified time, which varies with brands. Temperature and stirring is preferably controlled by a process computer program. This part of the process is traditionally named "sweating" but is more close to a pasteurisation process. After pasteurisation the moist snuff batch is cooled down and the rest of the ingredients are added. The power of the mixing and the time period for the mixing may be crucial for obtaining an optimal product.

According to of the present invention there is provided a method wherein water is added in step i) giving a final moisture content of from 30 to 50% per weight or more, preferably approximately from 35 to 41 %, as determined by Karl Fischer titration, to obtain good performance for packing the product in pouches.

According to a preferred embodiment of the present invention there is provided a method wherein the humectant is glycerol or propylene glycol or a combination thereof, preferably glycerol.

According to a preferred embodiment of the present invention there is provided a method wherein the NaCl is added in an amount from approximately 6 to 16 % (calculated on dry basis according to Formula I as set out below), preferably 8 to 10 %.

According to a preferred embodiment of the present invention there is provided a method wherein glycerol is added in an amount from approximately 2 to 15 % (based on Formula II as set out below), preferably from approximately 8 to 12 %.

According to a preferred embodiment of the present invention there is provided a method wherein the flavours are selected from the group containing fruits, berries, flowers, herbs, oil of fruits and edible plants or a combination thereof.

According to a preferred embodiment of the present invention there is provided a method wherein the other salt is a carbonate or ammonium chloride.

According to a preferred embodiment of the present invention there is provided a method wherein the dye is caramel (E150) or vegetable carbon (E153).

According to a preferred embodiment of the present invention there is provided a method wherein the additive is selected from the group containing extracts from fruits, leaves, berries, vegetables, barks and herbs or a combination thereof.

According to a preferred embodiment of the present invention there is provided a method wherein sweetening agents, flavouring agents, colour agents and/or dyes additionally are added in step a).

According to a preferred embodiment of the present invention there is provided a method wherein NaCl is added from approximately 6 to 16 %, preferably 8 to 10%, and glycerol is added from approximately 2 to 15 %, preferably approximately 8 to 12 % (the figures are all calculated according to formula I and II, respectively).

According to a preferred embodiment of the present invention there is provided a method wherein the heat treatment in step ii) is applied during approximately 1 to 30 hours, preferably approximately 10 h, with mixing each quarter of an hour.

According to a preferred embodiment of the present invention there is provided a method wherein the plant fibers is maize fibers and its weight fraction distribution is as follows: 8-20% < 100$\mu$m,

100$\mu$m<22-34% <160$\mu$m,
160$\mu$m<28-45%<250$\mu$m, and
16-37% of the fiber blend>250$\mu$m

According to a preferred embodiment of the present invention there is provided a method wherein an ingredient selected from the group consisting of: caffeine, red clover, Echinacea, Green tea extract, Maca, Mate, Matcha, Roiboos, Ginger, Rose hips, white clover, sweet clover, ginseng, guarana, arctic root, rosmary, buckthorn, bilberry, cranberry, lingonberry, anise, clove, gum tragacanth, gum arabic, gum acacia, gum karaya, locust bean gum, xanthan gum, or combinations thereof is added.

According to a preferred embodiment of the present invention there is provided a method wherein Guarana, caffeine, ginseng, matcha, maca, mate and green tea extract is added. Guarana may be added to about 16%, or down to about 4%, depending on desired caffeine level (calculations according to formula I and II as set out below). This interval is desirable from a processing point of view. Furthermore, Guarana may be used both for its caffeine content as well as content of polyphenols, or more specific tannins. This has a health benefit as well as taste enhancement. For an application where health and taste are in focus, the addition up against 16% is preferred. Caffeine may be added to about 16% down to 1% depending on desired caffeine level. Caffeine in this interval is desirable from a processing point of view. The effect of caffeine can be regarded as well known. Ginseng may be added with 2%, 5%, 14% or 27% by weight ginsenosides. Depending on ginseng quality the additions of ginseng differ considerably. All the stated ginsenoside concentrations can be used. Starting from the lowest concentration (2% ginsenosides) from about 3 to about 9% is the desired range (calculated in accordance with formula I and II as set out below). For higher concentration of ginsenosides, the amount of ginseng may be reduced. The addition of highly concentrated ginseng (27%) may be in the range of from about 0.2 to about 0.8% (calculated in accordance with formula I and II as set out below). No matter the concentration of ginsenosides an addition of ginseng up to about 20% by total weight works from a processing point of view. Effect of ginseng can be regarded as well known, and dose depends on type of application and intended use. Green tea extract in powder or ethanol can be added in levels of from about 0.5 to about 2.5 %, to achieve both taste and preservation effect (calculations according to formula I and II below). The tea-type plants matcha, rooibos, maca, mate can be used the same way as green tea extract, with the same level of addition to the product.

According to a preferred embodiment of the present invention there is provided a method wherein caffeine, gurarana and ginseng are added.

According to a preferred embodiment of the present invention there is provided a method wherein Green tea, Maca, Mate and Guarana are added.

According to a preferred embodiment of the present invention there is provided a method wherein Guarana, Ginseng, Mate, Maca and Green tea extract are added.

According to a preferred embodiment of the present invention there is provided a method wherein Matcha and/or Green tea extract are added.

According to a preferred embodiment of the first aspect of the present invention there is provided a method wherein Caffeine, Guarana, Ginseng, Maca and Mate are added.

According to a preferred embodiment of the present invention there is provided a method wherein Roiboos is added.

The finalized non-tobacco moist snuff composition may be packaged in any suitable container, such as in a tin or can (optionally provided with a lid), in a plurality of individual mesh pouches, or any other package known in the art.

Preferred features of each aspect of the invention are as for each of the other aspects mutatis mutandis. The prior art documents mentioned herein are incorporated to the fullest extent permitted by law. The invention is further described in the following examples in conjunction with the appended figures, which do not limit the scope of the invention in any way. Embodiments of the present invention are described in more detail with the aid of examples of embodiments and figures, the only purpose of which is to illustrate the invention and are in no way intended to limit its extent.

**Short description of the figures**

Fig. 1 shows the manufacturing process of moist snuff in accordance with the GothiaTek® standard, when making a tobacco containing product.

Fig. 2 shows a flow sheet for the manufacturing of plant fiber-based snuff portions according to the first aspect of the present invention. Flavour additives as e.g. liquorice or ammonium chloride may differ from product to product, but they are desirable when aiming for a product which resembles moist tobacco-containing snuff.

**Examples**

*Example 1*

Moist snuff in accordance with the second aspect of the invention was manufactured in accordance with the **Gothia**Tek® standard, here adapted for a non-tobacco containing product as set out above, and said snuff was filled into pouches. The fibers that were used were:

Buckwheat fibers (SOFABRAN F 170 (buckwheat))
Maize fibers (SOFABRAN F 184-80 (maize))
Apple fibers (Vitacel ® Bio- Apple Fiber AF 12).

The buckwheat and maize fibers were obtained from AB R. Lundberg, while the Apple fibers were obtained from LCH Kemiflor AB.

The buckwheat fibers and the maize fibers were finely ground (as set out below).

| | | The proportions were |
|---|---|---|
| Buckwheat fibers | 60 % | (approx. 90 % of the fibers with a size <250 $\mu$m) |
| Maize fibers | 20 % | (approx. 90 % of the fibers with a size <250 $\mu$m; "fine maize") |
| Apple fibers | 20 % | (approx. 60 % of the fibers with a size <315 $\mu$m) |
| | | (approx. 20 % of the fibers with size <100 $\mu$m) |

The fibers were pasteurized in a heat process in accordance with the **Gothia**Tek® standard (which normally is used when producing moist tobacco-containing snuff). By using this method the product will get a suitable consistency for packaging into pouches. The pasteurization process took place during 1 -30 hours, wherein also mixing and steam injection was performed. During the pasteurization process fibers were added together with NaCl (6-16%, preferably 8-10 %, calculated according to formula I), caramel and glycerol (2-15%, preferably 8-12 %, calculated according to formula II), depending on moisture content. Glycerol is important for the consistency of the product. NaCl is important for the product safety and the taste. Preferably the glycerol is added before the heat treatment. The blending (mixing) is also very important for the final consistency. Preferably each quarter of an hour, the mix is fully blended by using a mixing arrangement in the blender. After the pasteurization process, flavours were added together with liquorice and ammonium chloride.

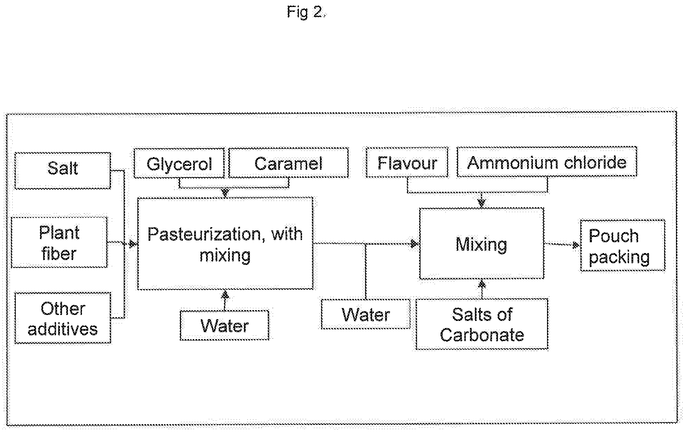

The heat treated and flavoured material was then packed in pouches (or as is in cans as set out in the examples below). The manufacturing process is further illuminated in Fig. 2.

Formulas for calculating different levels independent of the moisture content of the snuff Formula (I) for calculating the salt addition:

$$\textit{salt}\ \text{level} = \frac{\textit{Amount}\ \text{of Sodium Chloride [kg]}}{\textit{Total}\ \text{dry weight [kg]}} \times 100 \qquad [\%]^1\ \text{See note below}$$

[1] Total dry weight should be calculated in relation to water content measurement by Karl Fischer analysis

Formula (II) for calculating the glycerol level in the same way as above:

$$\textit{glycerol}\ \text{level} = \frac{\textit{Amount}\ \text{of glycerol [kg]}}{\textit{Total}\ \text{dry weight [kg]}} \times 100 \qquad [\%]^1\ \text{See note below}$$

*Example 2*

Moist snuff in accordance with the second aspect of the invention was manufactured in accordance with the **Gothia**Tek® standard as set out above, and said snuff was not filled into pouches. The fibers that were used in this example were:

> 80 % Buckwheat fibers (SOFABRAN F 170 (buckwheat))
> 20 % Maize fibers (fine maize), (SOFABRAN F 184-80 (maize))
> NaCl was added to 6-16%, preferably 8-10 %
> Glycerol was added to 2-15%, preferably 8-12 %.

The calculations were in accordance with the above mentioned formulas (I) and (II). The buckwheat and maize fibers were obtained from AB R. Lundberg

*Example 3*

Moist snuff in accordance with the second aspect of the invention was manufactured in accordance with the **Gothia**Tek® standard as set out above, and said snuff was not filled into pouches. The fibers that were used were

> Buckwheat fibers (SOFABRAN F 170 (buckwheat))
> Maize fibers (SOFABRAN F 184-80 (maize)).
> Oat fibers (Vitacel 401)
> NaCl was added to 6-16%, preferably 8 10 %
> Glycerol was added to 2-15%, preferably 8-12 %.

The calculations were in accordance with the above mentioned formulas (I) and (II). The buckwheat and maize fibers were obtained from AB R. Lundberg. The oat fibers were obtained from LCH Kemiflor AB.
The buckwheat fibers and the maize fibers were finely ground (as set out below).
The proportions were

| | | |
|---|---|---|
| Buckwheat fibers | 60 % | (approx. 90 % of the fibers with a size <250 μm) |
| Maize fibers | 20 % | (approx. 90 % of the fibers with a size <250 μm; "fine maize") |
| Oat fibers | 20% | (approx. 60 % of the fibers with a size <315 μm) |

The three examples 1 to 3 gave as results thereof good pinches of non-tobacco containing snuff with a good taste. The caramel which may be used in all three examples is Sockerkulor N, provider AB Fermia.

*Example 4 (a preferred embodiment of the second aspect)*

Moist snuff in accordance with the second aspect of the invention was manufactured in accordance with the **Gothia**Tek® standard as set out above, and said snuff was not filled into pouches. The fibers used were solely maize fibers (100 %).

> Coarse maize (SOFABRAN F 184-400 (maize)) and
> Fine maize, (SOFABRAN F 184-80 (maize))
> NaCl was added to approximately 6-16 %, preferably 8-10 %
> Glycerol was added to 2-15 %, preferably 8-12 %.

The calculations for NaCl and Glycerol were in accordance with the above mentioned formulas (I) and (II). The maize fibers were obtained from AB R. Lundbergs.
Here short time heat treatment was applied during 10.5 h with mixing each quarter of an hour. By using this process a well tasting product was achieved.
The fraction distribution for the maize fibers was as follows:

> 8-20% < 100μm,
> 100μm<22-34% <160μm,
> 160μm<28-45%<250μm, and

16-37% of the fiber blend>250μm

*Example 5*

Moist snuff in accordance with the first aspect of the invention was manufactured in accordance with the **Gothia**Tek® standard as set out above, and said snuff was not filled into pouches. The fiber used was

Oat fiber (Vitacel 401, provided by LCH Kemiflor AB)
NaCl added to 6-16%, preferably 8-10%
Glycerol was added to 2-15% preferably 8-12%

Calculations were in accordance with above mentioned formulas (I) and (II). Approximately 60% of the fiber material were of size <315μm.

*Example 6*

Moist snuff in accordance with the first aspect of the invention was manufactured in accordance with the GothiaTek® standard as set out above, and said snuff was not filled into pouches. The fibres used were

Oat fiber (Vitacel 401, provided by LCH Kemiflor AB) or
Maize fiber (F184-400 and F184-80)
NaCl added to 6-16%, preferably 8-10%
Glycerol was added to 2-15%, preferably 8-12%
Water to achieve water content of approximately 30-40%

To this mixture Guarana, caffeine, ginseng, matcha, maca, mate, green tea extract were added to the above formulation in proportions mentioned below.
Guarana may be added (18-22% caffeine, maximum tannin content 15%, provider AB R. Lundberg) to about 16%, or down to about 4%, depending on desired caffeine level. This interval is from a processing point of view desirable. Furthermore, Guarana is used both for its caffeine content as well as content of polyphenols, or more specific tannins. This has a health benefit as well as taste enhancement. For an application where health and taste are in focus, the addition up against about 16% is preferred.
Caffeine may be added (appr. 99.5% pure, natural or synthetic, provider Bröste AB) at 13% down to 1% depending on desired caffeine level. Caffeine in this interval is from a processing point of view desirable. The effect of caffeine can be regarded as well known.
Ginseng (2%, 5%, 14% or 27% ginsenosides calculated as assay (HPLC) on individual ginsenosides Rg1, Re, Rf, Rb1, Re, Rb2, and Rd-content, provider Univar Fiskefood AB). Depending on ginseng quality the additions of ginseng differ considerably. All the stated ginsenoside concentrations may be used without any problems. Starting from the lowest concentration (2% ginsenosides) from 3 to 9% is the desired range. For higher concentration of ginsenosides, the amount of ginseng is preferably reduced. The addition of highly concentrated ginseng (27%) is in the range of from 0.2 to 0.8%. No matter the concentration of ginsenosides an addition of ginseng up to 20% works well from a processing point of view. Effect of ginseng can be regarded as well known, and dose depends on type of application and intended use.
Green tea extract in powder or ethanol solution (both with 0.2% caffeine, Catechin 2.5 - 5%, Epigallocatchin 1 - 2%, provider AB R.Lundberg) can be added in levels of 0.5 - 2.5%, to achieve both taste and preservation effect.
The plants matcha, rooibos, maça, mate can be used the same way as green tea extract, with the same level of addition to the product.
All of these additives can be added simultaneously to the product, to achieve a multifunctional product. It is however, preferred to use only caffeine, gurarana and ginseng in the same formulation. Another preferred way of formulating the product is to use Green tea extract, Maca, Mate and Guarana. Yet another preferred formulation is to use Guarana, Ginseng, Mate, Maca and Green tea extract. Roiboos can be added to all the mentioned formulations to achieve colour and taste enhancement. Matcha and Green tea extract can be used to accomplish a formulation more focused on green tea profile in taste and preservation effect. Finally a formulation with Caffeine, Guarana, Ginseng, Maca and Mate can successfully be used for an "energetic" formulation.
Calculations were in accordance with above mentioned formulas (I) and (II). Approximately 60% of the fiber material were of size <315 μm.

*Comments of the above examples*

It is also possible to use the following fibers in order to manufacture non-tobacco containing moist snuff:

- Oat fibers (e.g. VITACEL 401, provider LCH Kemiflor AB)
- Apple fibers (e.g. VITACEL Bio-Apple Fiber AF 12, provider LCH Kemiflor AB)
- Sugarbeet fibers (e.g. Fibrex ®, provider Danisco Sugar AB)
- Potato fibers (e.g. Vitacel KF 200, provider LCH Kemiflor AB)
- Coarse maize (e.g. SOFABRAN F 184-400 (Maize), provider AB R. Lundbergs)
- Fine maize, (e.g. SOFABRAN F 184-80 (Maize), provider AB R. Lundbergs)
- Buckwheat fibers (e.g. SOFABRAN F 170 (buckwheat), provider AB R. Lundbergs)
- Cellulose fibers (e.g. HEWETEN (micro-crystalline cellulose), provider LCH Kemiflor AB)
- Powdered cellulose (e.g. Vitacel, provider LCH Kemiflor AB)

When it comes to the additions, glycerol may be varied between approximately 2-15 % according to formula I and II (with preferred results at 8-12 %), NaCl may be varied between 6 and 16 % according to formula I and II (with good results in the full interval, preferably 8-10 % is used)

Flavour additives that further may be added are liquorice and ammonium chloride.

Various embodiments of the present invention have been described above but a person skilled in the art realizes further minor alterations, which would fall into the scope of the present invention. The breadth and scope of the present invention should not be limited by any of the above-described exemplary embodiments, but should be defined only in accordance with the following claims and their equivalents. For example, any of the above-noted methods can be combined with other known methods. Other aspects, advantages and modifications within the scope of the invention will be apparent to those skilled in the art to which the invention pertains.

**Claims**

1.    A method for manufacturing a non-tobacco moist snuff composition for oral use, comprising one or more plant fibers, the method comprising the following steps:

   a) providing one or more plant fibers selected from the group consisting of maize fibers, oat fibers, tomato fibers, barley fibers, rye fibers, sugar beet fibers, buck wheat fibers, potato fibers, cellulose fibers, apple fibers and cocoa fibers, preferably in flour form, optionally preceded by grinding or cutting and/or sieving of raw material for providing said one or more plant fibers;
   b) processing of the one or more plant fibers provided in step a),
   preceded by mixing if more than one type of fibers are used or if fibers with different size distribution are used;
   wherein step b) comprises the following steps:

      i) adding water, to give a final water content of from 30 to 50% per weight, one or more humectants, and NaCl to the plant fibers under stirring to form a mixture;
      ii) heating and keeping the mixture heated, thus achieving a pasteurisation of the mixture,
      iii) cooling the moist snuff mixture; and
      iv) optionally adding other ingredients such as one or more other salts, humectants, dyes, flavours and flavour additives, such as liquorice and ammonium chloride,

   c) and optionally packing, either in pouches, which is preferred, or as is in cans.

2.    A method according to claim 1 wherein water is added in step i) giving a final water content from 35 to 41 %.

3.    A method according to claim 1 wherein the humectant is glycerol or propylene glycol or a combination thereof, preferably glycerol.

4.    A method according to claim 1 wherein the NaCl is added in an amount from 6 to 16 %, preferably 8-10 %.

5.    A method according to claim 3 wherein glycerol is added in an amount from 2 to 15 %, preferably from 8-12 %.

6.    A method according to claim 1 wherein the flavour is selected from the group containing fruits, berries, flowers, herbs, oil of fruits and edible plants or a combination thereof.

7. A method according to claim 1 wherein the other salt is a carbonate or ammonium chloride.

8. A method according to claim 1 wherein the dye is caramel or vegetable carbon.

9. A method according to claim 1 wherein the additive is selected from the group containing extracts from fruits, leaves, berries, vegetables, barks and herbs or a combination thereof.

10. A method according to claim 1 wherein sweetening agents, flavouring agents, colour agents and/or dyes additionally are added in step a).

11. A method according to claim 1 wherein NaCl is added from 6 to 16 %, preferably 8-10 %, and glycerol is added from 2-15 %, preferably approximately 8-12 %.

12. A method according to claim 11 wherein the heat treatment in step ii) is applied during from 1 to 30 hours, preferably approximately 10 h, with mixing each quarter of an hour.

13. A method according to claim 12 wherein the plant fibers is maize fibers and its weight fraction distribution is as follows:

8-20% < 100$\mu$m,
100$\mu$m<22-34% <160$\mu$m,
160$\mu$m<28-45%<250$\mu$m, and
16-37% of the fiber blend>250$\mu$m

14. A method according to claim 1 wherein an ingredient selected from the group consisting of: caffeine, red clover, Echinacea, Green tea extract, Maca, Mate, Matcha, Roiboos, ginger, rose hips, white clover, sweet clover, ginseng, guarana, arctic root, rosmary, buckthorn, bilberry, cranberry, lingon berry, anise, clove, gum tragacanth, gum arabic, gum acacia, gum karaya, locust bean gum, xanthan gum, or combinations thereof is added.

15. A method according to claim 14 wherein Guarana, caffeine, ginseng, matcha, maca, mate, green tea extract are added.

16. A method according to claim 14 wherein caffeine, gurarana and ginseng are added.

17. A method according to claim 14 wherein Green tea, Maca, Mate and Guarana are added.

18. A method according to claim 14 wherein Guarana, Ginseng, Mate, Maca and Green tea extract are added.

19. A method according to claim 14 wherein Matcha and/or Green tea extract are added.

20. A method according to claim 14 wherein Caffeine, Guarana, Ginseng, Maca and Mate are added.

21. A method according to any one of claims 14-20 wherein Roiboos is added.

**Patentansprüche**

1. Verfahren zur Herstellung einer feuchten Schnupfzusammensetzung ohne Tabak zur oralen Verwendung, umfassend eine oder mehrere Pflanzenfasern, wobei das Verfahren die folgenden Schritte umfasst:

a) Bereitstellen einer oder mehrerer Pflanzenfasern ausgewählt aus der Gruppe bestehend aus Maisfasern, Haferfasern, Tomatenfasern, Gerstenfasern, Roggenfasern, Zuckerrübenfasern, Buchweizenfasern, Kartoffelfasern, Cellulosefasern, Apfelfasern und Kakaofasern, vorzugsweise in Mehlform, optional mit vorausgehendem Mahlen oder Schneiden und/oder Sieben von Rohmaterial zum Bereitstellen der einen oder mehreren Pflanzenfasern;
b) Verarbeiten der einen oder mehreren Pflanzenfasern, die in Schritt a) bereitgestellt werden, mit vorausgehendem Mischen, wenn mehr als ein Typ von Fasern verwendet werden oder wenn Fasern mit unterschiedlicher Größenverteilung verwendet werden; wobei Schritt b) die folgenden Schritte umfasst:

> i. Zugeben von Wasser, um einen Endwassergehalt von 30 bis 50 Gew.-% zu ergeben, einem oder mehreren Befeuchtungsmittel und NaCl zu den Pflanzenfasern unter Umrühren, zur Bildung einer Mischung;
> ii. Aufwärmen der Mischung und Aufrechterhalten der Temperatur der aufgewärmten Mischung, wodurch eine Pasteurisierung der Mischung erreicht wird;
> iii. Kühlen der feuchten Schnupfmischung; und
> iv. Optional Zugeben von anderen Bestandteilen wie einem oder mehreren Salzen, Befeuchtungsmitteln, Färbemitteln, Aromen und Aromaadditiven, wie z.B. Lakritz und Ammoniumchlorid,

> c) und optional Verpacken, entweder in kleinen Beuteln, was bevorzugt wird, oder in Dosen.

2. Verfahren nach Anspruch 1, wobei Wasser in Schritt i) zugegeben wird, um einen Endwassergehalt von 35 bis 41% zu ergeben.

3. Verfahren nach Anspruch 1, wobei das Befeuchtungsmittel Glycerol oder Propylenglycol oder eine Kombination davon, vorzugsweise Glycerol ist.

4. Verfahren nach Anspruch 1, wobei das NaCl in einer Menge von 6 bis 16%, vorzugsweise 8 bis 10%, zugegeben wird.

5. Verfahren nach Anspruch 3, wobei Glycerol in einer Menge von 2 bis 15%, vorzugsweise von 8 bis 12%, zugegeben wird.

6. Verfahren nach Anspruch 1, wobei das Aroma aus der Gruppe ausgewählt ist, die Früchte, Beeren, Blumen, Kräuter, Öl von Früchten und essbare Pflanzen oder eine Kombination davon enthält.

7. Verfahren nach Anspruch 1, wobei das andere Salz ein Carbonat oder Ammoniumchlorid ist.

8. Verfahren nach Anspruch 1, wobei das Färbemittel Karamell oder pflanzlicher Kohlenstoff ist.

9. Verfahren nach Anspruch 1, wobei das Additiv aus der Gruppe ausgewählt ist, die Extrakte aus Früchten, Blättern, Beeren, Gemüse, Rinden und Kräutern oder eine Kombination davon enthält.

10. Verfahren nach Anspruch 1, wobei zusätzlich Süßungsmittel, Aromastoffe, Färbemittel und/oder Farbstoffe in Schritt a) zusätzlich zugegeben werden.

11. Verfahren nach Anspruch 1, wobei NaCl von 6 bis 16%, vorzugsweise von 8 bis 10%, und Glycerol von 2 bis 15%, vorzugsweise von etwa 8 bis 12%, zugegeben wird.

12. Verfahren nach Anspruch 11, wobei die Temperaturbehandlung in Schritt ii) während 1 bis 30 Stunden, vorzugsweise etwa 10 Stunden, unter Mischen jede Viertelstunde angewendet wird.

13. Verfahren nach Anspruch 12, wobei die Pflanzenfasern Maisfasern sind und ihre Gewichtsfraktion wie folgt ist:

> 8-20% <100 $\mu$m,
> 100 $\mu$m <22-34% <160 $\mu$m,
> 160 $\mu$m <28-45% <250 $\mu$m, und
> 16-37% der Fasermischung> 250 $\mu$m

14. Verfahren nach Anspruch 1, wobei ein Bestandteil, der ausgewählt ist aus der Gruppe bestehend aus: Koffein, Rotklee, Sonnenhut, Grünteeextrakt, Maca, Mate, Matcha, Roiboos, Ingwer, Hagebutten, Weißklee, Süßklee, Ginseng, Guarana, Arctic Root, Rosmarin, Sanddorn, Blaubeere, Moosbeere, Preiselbeere, Anis, Nelke, Tragantgummi, Gummiarabikum, Akaziengummi, Karayagummi, Johannisbrotkernmehl, Xanthangummi oder Kombinationen davon zugegeben wird.

15. Verfahren nach Anspruch 14, wobei Guarana, Koffein, Ginseng, Matcha, Maca, Mate, Grünteeextrakt zugegeben werden.

**16.** Verfahren nach Anspruch 14, wobei Koffein, Gurarana und Ginseng zugegeben werden.

**17.** Verfahren nach Anspruch 14, wobei grüner Tee, Maca, Mate und Guarana zugegeben werden.

**18.** Verfahren nach Anspruch 14, wobei Guarana, Ginseng, Mate, Maca und Grünteeextrakt zugegeben werden.

**19.** Verfahren nach Anspruch 14, wobei Matcha und / oder Grünteeextrakt zugegeben werden.

**20.** Verfahren nach Anspruch 14, wobei Koffein, Guarana, Ginseng, Maca und Mate zugegeben werden.

**21.** Verfahren nach einem der Ansprüche 14 bis 20, wobei Roiboos zugegeben wird.

**Revendications**

**1.** Procédé de fabrication d'une composition humide à priser sans tabac à usage oral, comprenant une ou plusieurs fibres végétales, le procédé comprenant les étapes suivantes:

a) une fourniture d'une ou plusieurs fibres végétales choisie(s) dans le groupe constitué par les fibres de maïs, les fibres d'avoine, les fibres de tomate, les fibres d'orge, les fibres de seigle, les fibres de betterave, les fibres de blé noir, les fibres de pomme de terre, les fibres de cellulose, les fibres de pomme et les fibres de cacao, de préférence sous forme de farine, optionnellement précédée par un meulage ou une coupe et/ou un tamisage de la matière première pour fournir ladite une ou plusieurs fibre(s) végétale(s);
b) une transformation d'une ou plusieurs fibre(s) végétale(s) fournie(s) à l'étape a), précédée d'un mélange si plus d'un type de fibre est utilisé ou si des fibres de différentes tailles sont utilisées; dans lequel l'étape b) comprend les étapes suivantes:

i) ajouter de l'eau, pour fournir une teneur finale en eau de 30% à 50% en poids, un ou plusieurs humectant(s), et du NaCl aux fibres végétales sous agitation pour former un mélange;
ii) chauffer et maintenir le mélange chauffé, obtenant ainsi une pasteurisation du mélange,
iii) refroidir le mélange humide à priser; et
iv) ajouter optionnellement d'autres ingrédients tels qu'un ou plusieurs autres sels, humectants, colorants, arômes et additifs aromatisants, tels que la réglisse et le chlorure d'ammonium,

c) et optionnellement un emballage, soit dans des sachets, ce qui est préféré, soit dans des boîtes.

**2.** Procédé selon la revendication 1 dans lequel de l'eau est ajoutée dans l'étape i) donnant une teneur finale en eau de 35 à 41%.

**3.** Procédé selon la revendication 1 dans lequel l'humectant est du glycérol ou du propylène glycol ou une combinaison de ceux-ci, de préférence du glycérol.

**4.** Procédé selon la revendication 1 dans lequel le NaCl est ajouté en une quantité de 6 à 16%, de préférence de 8-10%.

**5.** Procédé selon la revendication 3 dans lequel du glycérol est ajouté en une quantité de 2 à 15%, de préférence de 8-12%.

**6.** Procédé selon la revendication 1 dans lequel l'arôme est choisi dans le groupe contenant les fruits, les baies, les fleurs, les herbes, l'huile de fruits et les plantes comestibles ou une combinaison de ceux-ci.

**7.** Procédé selon la revendication 1 dans lequel l'autre sel est un carbonate ou un chlorure d'ammonium.

**8.** Procédé selon la revendication 1 dans lequel le colorant est du caramel ou du carbone végétal.

**9.** Procédé selon la revendication 1 dans lequel l'additif est choisi dans le groupe contenant des extraits de fruits, de feuilles, de baies, de légumes, d'écorces et d'herbes ou une combinaison de ceux-ci.

**10.** Procédé selon la revendication 1 dans lequel des agents édulcorants, des agents aromatisants, des agents colorants et/ou des colorants sont en outre ajoutés à l'étape a).

11. Procédé selon la revendication 1 dans lequel du NaCl est ajouté de 6 à 16%, de préférence de 8-10%, et du glycérol est ajouté de 2-15%, de préférence approximativement 8-12%.

12. Procédé selon la revendication 11 dans lequel le traitement thermique à l'étape ii) est appliqué pendant 1 à 30 heures, de préférence approximativement 10 h, en mélangeant chaque quart d'heure.

13. Procédé selon la revendication 12 dans lequel les fibres végétales sont des fibres de maïs et sa répartition pondérale est la suivante:

> 8-20% <100$\mu$m,
> 100$\mu$m <22-34% <160$\mu$m,
> 160$\mu$m <28-45% <250$\mu$m, et
> 16-37% du mélange de fibres> 250 $\mu$m

14. Procédé selon la revendication 1 dans lequel un ingrédient choisi dans le groupe constitué par: la caféine, le trèfle rouge, l'Echinacée, l'extrait de thé Vert, la Maca, le Maté, le Matcha, le Roiboos, le gingembre, les fruits d'églantier, le trèfle blanc, le mélilot, le ginseng, le guarana, la Rhodiola rosea, le romarin, le nerprun, la myrtille, la canneberge, l'airelle, l'anis, le clou de girofle, la gomme adragante, la gomme arabique, la gomme acacia, la gomme karaya, la gomme de caroube, la gomme de xanthane, ou des combinaisons de ceux-ci est ajouté.

15. Procédé selon la revendication 14 dans lequel du Guarana, de la caféine, du ginseng, du matcha, du maca, du mate, de l'extrait de thé vert sont ajoutés.

16. Procédé selon la revendication 14 dans lequel de la caféine, du gurarana et du ginseng sont ajoutés.

17. Procédé selon la revendication 14 dans lequel du thé Vert, du Maca, du Maté et du Guarana sont ajoutés.

18. Procédé selon la revendication 14 dans lequel du Guarana, du Ginseng, du Maté, de la Maca et de l'extrait de thé Vert sont ajoutés.

19. Procédé selon la revendication 14 dans lequel du Matcha et/ou de l'extrait de thé Vert sont ajoutés.

20. Procédé selon la revendication 14 dans lequel de la Caféine, du Guarana, du Ginseng, de la Maca et du Maté sont ajoutés.

21. Procédé selon l'une quelconque des revendications 14-20 dans lequel du Roiboos est ajouté.

Fig 1.

The Manufacturing Process

The manufacturing process is in accordance with the **Gothia**Tek® standard, used for manufacture of tobacco containing oral moist snuff (snus).

Fig 2.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040123873 A
- US 2004118422 A

- WO 2004056218 A